# DEMANDE DE BREVET EUROPEEN

(11) **EP 1 850 204 A1**
(43) Date de publication de la demande: **31.10.2007**
(21) Numéro de dépôt: 06358006.2
(22) Date de dépôt: 28.04.2006
(51) Int. Cl.: G06F 1/16, G06F 1/26

(54) **Ordinateur portable avec alimentation électrique de type photovoltaique.**

(71) Demandeur: Charlier, Jean-Philippe, 13015 Marseille (FR)
(72) Inventeur: Charlier, Jean-Philippe, 13015 Marseille (FR)
(74) Mandataire: Roman, Michel

(57) **Abrégé**

La présente invention a pour objet un ordinateur portable comportant une alimentation électrique de type photovoltaïque.

Elle est constituée d'au moins une photopile (2, 3), ou platine de cellules photovoltaïques, à haut rendement, intégrée de façon fixe ou amovible à un appareil de type ordinateur portable (1), disposée de préférence au dos du capot (5) dudit ordinateur et dimensionnée de manière à pouvoir capter une énergie suffisante pour assurer le fonctionnement de l'appareil, seule ou associée à une batterie rechargeable.

L'invention se rapporte d'une manière générale au domaine industriel et commercial de la fabrication et de la diffusion d'ordinateurs portables sans fil ou mobiles permettant de travailler et de communiquer en tous lieux, et en particulier en déplacements divers.

## Description

La présente invention a pour objet un ordinateur portable comportant une alimentation électrique de type photovoltaïque.

Elle se rapporte d'une manière générale au domaine industriel et commercial de la fabrication et de la diffusion d'ordinateurs portables, sans fil ou mobiles permettant de travailler et de communiquer de tous lieux, et en particulier en déplacements divers.

Les appareils de ce type sont actuellement alimentés par des batteries électriques dont l'autonomie est limitée en particulier en cas d'usage intensif ou permanent.
Ces batteries doivent être rechargées par une alimentation de type externe (220 v), ce qui nécessite une prise de courant à proximité avec divers accessoires pour pouvoir se connecter selon le pays ou l'endroit ou l'on se trouve, ce qui n'est pas toujours évident.
Il peut arriver de ne plus pouvoir utiliser correctement l'ordinateur portable lorsque la charge de la batterie qui permet de faire fonctionner celui-ci est trop faible et ne permet plus un fonctionnement correct, ce qui nécessite le recours à l'alimentation externe (220 v).

Or il existe depuis un certain temps déjà un moyen permettant de produire de l'électricité à partir du rayonnement lumineux ambiant dont la longueur d'onde peut être comprise dans le spectre visible, dans l'infrarouge ou l'ultraviolet . Il s'agit de la photoélectricité qui, dans certain corps (semi-conducteurs, notamment), libère des électrons sous l'effet d'un flux lumineux, l'apparition d'une différence de potentiel entre deux couches d'une plaquette de semi-conducteur dont les conductibilités sont opposées, ou entre un semi-conducteur et un métal. Ce phénomène a donné lieu à la réalisation des cellules photovoltaïques, ou photopiles, ou piles solaires, qui transforment directement l'énergie lumineuse en énergie électrique.

L'efficacité des cellules photovoltaïques ne cesse de croître et les dernières réalisations dans ce domaine atteignent, sous un volume variable et parfois réduit, un rendement suffisamment élevé pour fournir le courant électrique nécessaire pour faire fonctionner un ordinateur portable par exemple, ou divers systèmes électroniques.

Ces équipements sont déjà utilisés pour recharger les batteries de téléphones mobiles.
On peut citer par exemple la demande de brevet n° WO 007 6051 qui décrit un bloc portatif spécialement conçu pour la recharge de blocs de batteries de téléphones portable et comprenant un boîtier dont au moins une surface est pourvue de plusieurs cellules solaire, couplées à un circuit de commande de la tension du bloc batterie à recharger.
Un autre brevet, publié sous le numéro FR 2 844 660, concerne un dispositif d'alimentation pour la recharge de batterie et est caractérisé en ce qu'il comprend un film solaire d'un substrat souple sur lequel est déposée une pluralité de cellules solaires photovoltaïques utilisées comme source d'énergie électrique et des moyens de connexion électrique vers la batterie.
Malheureusement, ces chargeurs augmentent l'encombrement et le poids de l'équipement mobile à alimenter.

Le dispositif selon la présente invention à pour objectif de pallier les inconvénients exposés ci-dessus grâce à un système d'alimentation électrique, ou de recharge de batterie pour ordinateur portables, utilisant des cellules photovoltaïques.
Il permet d'éviter la panne de l'appareil lors d'une utilisation intensive de celui-ci et de prolonger la durée de la charge de la batterie, ou de fournir de l'énergie électrique lorsque cette charge est entièrement utilisée, ou même de supprimer la batterie et de ne pas avoir ainsi recourt à l'alimentation secteur (220 v) ou autre accessoire pouvant fournir de l'électricité type cordon allume cigare pour véhicule ou autres.
Ce système permet de supprimer partiellement voir définitivement tout cordons externes pour faire fonctionner l'ordinateur portable.

II est constitué d'au moins une photopile, ou platine de cellules photovoltaïques, à haut rendement, intégrée de façon fixe ou amovible à un appareil de type ordinateur portable, disposée de préférence au dos du capot dudit ordinateur et dimensionnée de manière à pouvoir capter une énergie suffisante pour assurer le fonctionnement de l'appareil, seule ou associée à une batterie rechargeable.

Sur les dessins annexés, donnés à titre d'exemples non limitatifs de l'ormes de réalisation conformes à la présente demande,
la figure 1 représente, vu de dos en perspective axonométrique, un ordinateur portable ouvert avec platine photovoltaïque intégrée en face arrière,
la figure 2 montrent, vu de face, également en perspective axonométrique, un ordinateur portable avec deux platines photovoltaïques sur la face portant le clavier
et la ligure 3 représente, vu de côté, un ordinateur portable équipé d'une platine photovoltaïque amovible en face arrière.

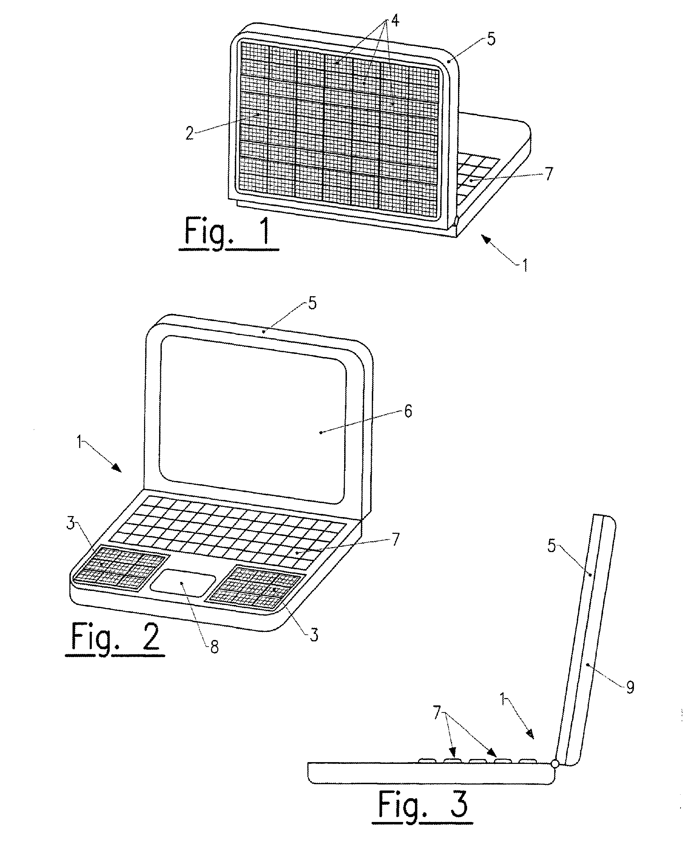

Le dispositif, figures 1 à 3, est constitué d'un ordinateur portable 1 de type quelconque comportant une ou plusieurs photopiles ou platines photovoltaïques 2, 3 associée(s) ou non avec une batterie rechargeable, la ou les photopiles assurant éventuellement seule(s) l'alimentation électrique.
La ou les photopile(s) 2, 3 sont constituées d'une série de cellules photovoltaïques 4 montées en série de manière à obtenir un courant électrique de voltage suffisant.

Plusieurs dispositions peuvent être envisagées :
- une photopile 2 située à l'opposé de l'écran 6, au dos du capot 5 de l'ordinateur portable et de préférence sur toute sa surface (Figure 1) ;
- une ou plusieurs photopiles 3 installée sur la face portant le clavier 7, par exemple deux photopiles situées de part et d'autre de la touche sensitive 8 de manoeuvre de la souris ;
- combinaison des deux dispositions précédentes, à savoir photopile 2 au dos du capot 5 et une ou plusieurs photopiles sur la face clavier.
   La ou les photopile(s) 2, 3, en particulier lorsqu'il s'agit d'une photopile montée au dos du capot 5 de l'ordinateur 1, peuvent être montées de manières amovible, ce qui permet de disposer de plusieurs utilisations.
- une photopile 2 amovible peut être agencée pour pouvoir être "clipsée" au dos du capot 5, ou fixée à l'aide d'un système de glissières ou d'un autre moyen, ce qui permet de l'utiliser pour différents types d'ordinateurs portables ou de la remplacer aisément. La photopile 2 pourra être reliée par câble à l'ordinateur 1, de façon à pouvoir être séparée de ce dernier tout en restant connectée, ce qui permet de l'orienter pour disposer d'un éclairement apte à produire une énergie électrique suffisante.

L'alimentation électrique de l'ordinateur portable 1 peut avantageusement être constituée d'un bloc 9 combinant en un seul élément une pile rechargeable et une photopile 2, l'ensemble, monté au dos du capot 5 de l'ordinateur portable 1, étant éventuellement amovible.

Le mode de fonctionnement du dispositif, lorsqu'il comporte une batterie rechargeable, pourra éventuellement être contrôlé à la demande au moyen d'une touche spéciale, d'un article du menu de l'ordinateur portable 1 ou d'un capteur qui pourrait se mettre en fonction jour/nuit selon l'Intensité lumineuse reçue ou d'un accessoire branché au système de mise en charge de l'appareil.
Le mode de fonctionnement peut consister en une alimentation mixte par les deux sources de courant, une alimentation par batterie seule ou par photopile seule ou encore en recharge de la batterie par la ou les photopiles 2, 3.

Le positionnement des divers éléments constitutifs donne à l'objet de l'invention un maximum d'effets utiles qui n'avaient pas été, à ce jour, obtenus par des dispositifs similaires.

## Revendications

1. °. Ordinateur portable comportant une alimentation électrique de type photovoltaïque, ayant pour objet d'éviter la panne de l'appareil lors d'une utilisation intensive de celui-ci, et de prolonger la durée de la charge de la batterie, ou même de supprimer complètement cette dernière, constitué d'un ordinateur portable (1) de type quelconque et d'au moins une photopile (2, 3), ou d'une platine de cellules photovoltaïques à haut rendement, intégrée de façon fixe ou amovible au dit ordinateur portable et formée d'une série de cellules photovoltaïques(5) montées en série de manière à obtenir un courant électrique de voltage suffisant,
**caractérisé en ce qu'**il est agencé pour permettre un contrôle à la demande de mode de fonctionnement au moyen d'une touche spéciale du clavier (7), d'un article du menu de l'ordinateur (1) ou d'un accessoire branché au système de connexions de mise en charge de l'appareil, le mode de fonctionnement pouvant consister en une alimentation par batterie seule, par photopile seule, en alimentation mixte par les deux sources de courant, ou encore en recharge de la batterie par la ou les photopiles (2,3).

2. °. Ordinateur portable selon la revendication 1, **se caractérisant par le fait que** l'alimentation électrique de l'ordinateur portable (1) est constituée d'un bloc (9) combinant en seul élément une batterie rechargeable et une photopile (2), l'ensemble, monté au dos du capot (5) dudit ordinateur portable, étant éventuellement amovible.

3. °. Ordinateur portable selon l'une quelconque des revendications précédentes, **se caractérisant par** le rait qu'il comporte une photopile (3) disposée à l'opposé de l'écran (6), au dos du capot (5).

4. °. Ordinateur portable selon la revendication 3, **se caractérisant par le fait que** la photopile (3) est agencée pour couvrir toute sa surface du dos du capot (5).

5. °. Ordinateur portable selon l'une des quelconque des revendications précédentes, **se caractérisant par le fait qu'**il est équipé d'une ou de plusieurs photopile(s) disposées sur la face de l'ordinateur portable (1) portant le clavier (7).

6. °. Ordinateur portable selon l'une quelconque des revendications 4 et 5, **se caractérisant par le fait qu'**il comporte à la fois une photopile (3) disposée au dos du capot (5) et d'une ou plusieurs photopile(s) disposées sur la face de l'ordinateur portant le clavier (7).

7. °. Ordinateur portable selon la revendication 1 **se caractérisant par le fait qu'**il est équipé d'une photopile (2) amovible agencée de façon à pouvoir l'utiliser pour différents types d'ordinateurs portables, ou la remplacer aisément.
